Europäisches Patentamt

European Patent Office

Office européen des brevets

(19)

(11) **EP 1 593 934 A1**

(12) **EUROPEAN PATENT APPLICATION**

(43) Date of publication:
09.11.2005 Bulletin 2005/45

(51) Int Cl.$^7$: **G01C 15/06**, G01C 5/00

(21) Application number: **04010760.9**

(22) Date of filing: **06.05.2004**

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(71) Applicant: **Leica Geosystems AG**
**9435 Heerbrugg (CH)**

(72) Inventors:
• **Zeng, Zheng Dong**
**09-286 Singapore 120611 (SG)**

• **Dumoulin, Charles Leopold Elisabeth**
**04-01, Singapore 679635 (SG)**
• **Ng, Chin Keong**
**05-267 Singapore 680635 (SG)**
• **Zhou, Keliang**
**03-95 Singapore (SG)**

(74) Representative: **Kaminski, Susanne**
**Büchel, Kaminski & Partner**
**Patentanwälte Est.**
**Austrasse 79**
**9490 Vaduz (LI)**

(54) **Levelling rod and level determination apparatus and method e.g. for geodetic applications**

(57)     The levelling rod (1) has a plurality of bars (11) therealong and serving to express a position along the levelling rod, each bar having a width (Wx) taken from a set of width values.

The pitch between two adjacent bars (11) is a variable value, and selected from a set of predetermined pitch values (p1, p2), such that the position along the levelling rod is expressed in terms of the following two parameters:

    i) the width (Wx) of at least one bar, and
    ii) at least one pitch value separating adjacent bars.

In an embodiment, the level has a set of coded height bar blocks provided with a constant length along the length measuring direction of a level to digitally indicate heights. Each bar block comprises 3 bar symbols which are aligned at two different pitches. The width dimensions of the bar symbols, with the selected constant pitch values determines that any 3 adjacent bar symbols in the longitudinal direction of the levelling staff is different from any other 3 adjacent bar symbols chosen from any other portion of the barcode scale.

The invention also relates to a level determination apparatus specifically adapted for that levelling bar, and to a method of using of that apparatus.

FIG. 1

EP 1 593 934 A1

## Description

## Field of the Invention

The present invention relates to a levelling rod and a level determination apparatus, e.g. for a geodetic electronic levelling instrumentation in plane surveying applications. More particularly, the invention relates to a levelling rod (also known as a levelling staff) for automatically determining a collimated position, used in combination with an electronic level. The levelling rod contains blocks of coded patterns arrayed in the longitudinal direction, each indicating height at determined intervals.

## Background Art

A difference in elevation is generally measured using a levelling rod and a level. In the case of conventional levelling instruments or levels that use a telescope, it is necessary to read a height reading scale on a remote levelling rod or staff. However, an accurate reading of the remote height reading scale via the telescope relies on the experience and degree of concentration of the operator. In addition, in a stadia measurement, since a horizontal distance must be obtained by multiplying a measurement value by telescopic magnification, the calculation becomes awkward. Accordingly, conventional methods are susceptible of yielding reading errors, particularly where the operators are inexperienced or tired.

Various approaches have been proposed to eliminate human operator reading errors and speed up the measurement process. For example, Japanese Patent No. 57749-81 proposes to provide the levelling staff with coded light sources corresponding to the height on the reading scale. This requires reading the staff with the aid of a receiver adapted for that purpose. The levelling staff according to this prior art is very complicated and unpractical.

It has also been proposed to project a laser beam along a horizontal direction and detect the beam on the staff. However, in such known apparatus, the diameter of the laser beam spot projected on the staff is large, whereupon a precise measurement cannot be ensured.

Patent document DE 342806 discloses an electronic levelling apparatus for use with a staff as a target of collimation. The staff is provided with a barcode scale and numeric values indicating height. For visual reading, graduations are commonly provided with written numerals, whereas the barcode scale is used for electronic reading. The staff is provided with a patterned scale, whereupon it can be automatically and precisely read. The coded patterns are applied in correspondence with the altitude scale of a levelling rod. The barcode is produced by using selected generator polynomials of a pseudo-stochastic bit sequence. A prominent characteristic of the sequence is that every possible number can only occur once within their periodicity. However, for efficient decoding, the method requires a distance sensor attached to the focusing mechanism to acquire the coarse measurement distance obtained from the position of the focusing drive and the section of the scale in order to speed up computation.

Patent document US-A-5 887 354 (Sokkia) proposes a fixed white bar width concept which is able to give very good scale (distance) information. However, for large distances, it risks not yielding a very clear frequency indication, and its operation makes it complicated to achieve very good distance estimation. At far distances, a larger piece of the staff is projected onto the sensor (the resolution of the staff projected onto the fixed sensor pixel decreases with increased distance of the staff, in terms of pixel resolution). If the pixel resolution falls below the fixed bar pattern period, the coarse distance measurement using fast Fourier transform (FFT) will no longer work (no input signal). Optimisation can be accomplished by chosing the pixel size of the sensor, the pixed pattern width of the staff and the magnification of the telescope.

Patent document US-A-5 537 201 (Topcon) proposes to apply a constant pitch, which gives a single frequency, to indicate distance. Specifically, it uses 2 phase modulated signals in a cyclic arrangement. This arrangement is also known from radar technology and yields a high resolution. Each of the two signals is digitized and projected onto the staff using bar width modulation at a fixed interval. In order to separate the digitisation intervals, a third bar is used and also projected onto the staff (separator bar). The digitisation uses a constant pitch. The use of such a constant pitch is related to the constant pitch used in the aforementioned patent document US-A-5 887 354. Accordingly, the frequency peak is very high, and it is possible to use the frequency domain to produce a rough estimate of target distance. Its disadvantages have been discussed above (Sokkia). At close distances, the information content projected through the telescope onto the sensor is not sufficient to yield accuracte distance information (FFT fails). The separator bar is also used to indicate the start position of each coded digit on the staff. This arrangement will assist in decoding more particularly for a near distance. Because the separate bar is used with a constant width, it does not contribute to height encoding. In other words, it reduces the staff height encoding efficiency, whereupon the barcode distance is limited.

## Summary of the invention with objects.

In view of the foregoing, the applicant of the present invention has developed an electronic level capable of reading a difference of elevation electronically, and derived from the following analysis.

In barcodes, the information content can be encoded by colours, bars or spaces, or again by the dimension of the bars or spaces. The barcodes are typically comprised of parallel bars and spaces, with bars of varying widths representing strings of binary zeros and spaces of varying widths representing strings of binary ones. The specific arrangement of elements defines the encoded data according to a set of rules and definitions specified by the specific type of encoding used. To encode height readings, a collection of bar symbols (bar patterns) are concatenated together to form the complete barcode scale, with each height of the message being represented by its own corresponding group or block of bar symbols.

Bar symbols can be arranged at a uniformly constant pitch or a non-uniform pitch. Non-uniformly spaced bar symbols can conveniently define a non-repeating barcode extending longitudinally along the rod. When small bars can no longer be resolved in a definite manner at remote distances, code reading of a non-uniformly spaced barcode is carried out by means of an integral comparison operation between on the one hand the scale imaged on the receiver and on the other a stock of the scale imaged in the evaluating device, as a function of measurement distance and the section of the scale. It calls for prior information concerning the measurement distance obtained from the position of the focusing drive and the section of the scale. By detecting the constant pitch between bar symbols, the constant pitch enables to discriminate the width dimensions of bar symbols and provides a way to estimate the distance between the rod and level, thereby simplifying the whole decoding steps. However, it is difficult to encode a long, non-repeating barcode extending longitudinally along the rod. In order to acquire the uniqueness of the sequence of bar symbols from the barcode scale, "start" and "stop" bar symbols (also called separator bars) are sometimes added into the barcode to indicate where a barcode begins and ends. For electronic levelling applications, a limitation of barcodes that use "start" and "stop" patterns is that these patterns take up useful space because they do not encode any data. The number of bar symbols per unit length represented by the barcode scale is referred to as the density of the barcode. For short distances, the images of the patterns are digitised with sufficient resolution to distinguish them; but for long distances, it becomes difficult to recognise the patterns because the image width and image sensor unit cell size are closer. Within a specified field of view for a level telescope, a higher barcode density means that a closer Minimum Measurement Distance can be achieved. Moreover, within a unit length represented, a barcode with sparse bar symbols can be more easily recognised by using a certain telescopic magnification of the level. Therefore, the ratio of Maximum Measurement Distance to Minimum Distance can be accordingly increased by using a barcode scale without separator bars.

The present invention aims to provide a barcode scale for accurate and efficient electronic levelling at different measurement distances.

More particularly, according to a first aspect, the invention provides a levelling rod as defined in claim 1, for a level determining apparatus, the rod having a plurality of bars (barcode symbols) therealong which serve to express position indications along the levelling rod, each bar having a width (Wx) taken from a set of width values,

characterised in that the pitch between adjacent bars is non uniform, the pitch between a given pair of adjacent bars being a pitch value from a set of predetermined pitch values,

and in that the position along the levelling rod is expressed in terms of the following two parameters:

i) the width (Wx) of at least one bar, and
ii) at least one pitch value of adjacent bars.

Preferably, the two parameters together distinguish a position along the levelling rod from at least one neighbouring position along the levelling rod expressed by at least a different bar symbol width and/or at least one other pitch value.

The position along the levelling rod can be expressed in terms of a bar block of at least two successive bar symbols along the levelling rod and at least one pitch value of adjacent bars in the bar block.

In the preferred embodiment, the set of predetermined pitch values is composed of just two pitch values. In variants, the set of predetermined pitch values can comprise more than two different pitch values.

In the preferred embodiment, the bar block is comprised of first, second and third successive bars, the position information of the bar block being expressed by the widths of those bars, a pitch value for the pitch between the first and second bars, and a pitch value for the pitch between the second and third bars.

Preferably, any given bar block from the levelling rod is different from a bar block from any other portion of the levelling rod in terms of the set of values that comprise the width values and pitch value(s).

In the preferred embodiments, at least some bar blocks overlap each other by having at least one bar code symbol in common.

Advantageously, no specific separator symbol is present to delimit adjacent positions/bar blocks along the levelling rod, these positions being distinguished by the distinctness of a combination of the two parameters for the respective positions/bar blocks.

The width values of bars assigned to a respective position/bar block can have a predetermined relation such that the value(s) of the pitch(es) between those bars have a common denominator, whereby in a Fourier analysis, the selective frequency lines created by a particular pitch is enhanced through the modulations of the others.

The width values of the bars can belong to set Wx of width values, in which a large width value is a multiple n of a smaller width value, such as to optimise the dynamic range of the coding elements and cover a wider distance range.

A given position/bar block can be expressed by at least three successive bars and two same pitch values.

The width dimensions of the bars can be distributed pseudo-randomly from a set of predetermined values.

The position along the levelling rod can be expressed in terms of any subset of N different members of a set of at least N+1 successive bars along the levelling rod at the position, so allowing a position information to read from the rod even if only N out of N+1 or more than N+1 bars are identified.

Advantageously, any subset of N different members is different from any other subset of N different members of any other partially overlapping neighbouring set of N+1 members.

In the preferred embodiment, N=3, whereby a permutation of the widths of any 3 bars from 4 adjacent bars at the levelling rod is different from a permutation of the widths of any 3 bars from any set of 4 adjacent bars at any other portion of the levelling rod.

The width values of each bar expressing a position/ a bar block are preferably mutually different, thereby allowing automatic detection of an inverted levelling rod.

The width values of bars expressing a position/ a bar block can have a predetermined relation such that the value(s) of the spacings between those bars have a common denominator, whereby in a Fourier analysis, the selective spectral lines in the frequency domain created by a particular spacing is enhanced through the modulations of the other spacings. For instance, one width set can cover half of the bar block; each of the other width sets cover 25% (say) of the bar block. This provides modulation enhancement of the spectral lines in the frequency domain through selection of modulation of the widths for each set.

Each bar block can have a length equal to an integral multiple of at least one determined pitch value contained in that block. This similarly provides enhancement of the spectral lines by not only choosing multiples of a common denominator of the pitch widths but also for the set of widths from which each bar can be selected (additional enhancement of the frequency lines).

According to a second aspect, the invention relates to the use of the levelling rod according to the first aspect for obtaining a height indication, wherein the levelling rod is positioned substantially in a vertical plane, whereby the positions of the bars express a height value.

According to a third aspect, the invention provides a determination apparatus specifically adapted for use with the levelling rod according to the first aspect, comprising:

- means for obtaining an image of a portion of the levelling rod at a remote location,
- means for identifying the position of the imaged portion along the levelling rod in terms of the following two parameters:

  i) the width (Wx) of at least one bar of the imaged portion, and
  ii) the pitch value(s) of adjacent bars.

The apparatus can comprises means for decoding the relative position directly from an evaluation of the values of the two parameters.

The apparatus can implement an area scan sensor to allow for shifting of the staff, increased tolerance of staff alignment in the image.plane and automatic correction of the height readings of the tilted staff in the image plane.

In the preferred embodiment, the apparatus comprises:

- memory means storing data indicative of bar widths and pitches used for establishing relative positions along the levelling rod and their correspondance with the relative positions, and
- means for determining the relative position by comparing the imaged portion with the stored data.

The apparatus may also comprise:

- pattern detection means for detecting the pitches and a symbol bar of the levelling rod;
- memory means for storing the sequence of the widths of bar symbols and the corresponding sequence of the pitches between the bar symbols;
- computation means for obtaining the relative position information of the collimated portion on the levelling rod, based on comparing a detected signal from the pattern detecting portion with the sequence of the bar symbols in the memory portion.

The apparatus may also comprise:

- means for storing the pitch values and width values used for the levelling rod,
- means for identifying, from an imaged pitch, the corresponding particular predetermined stored pitch value, on the basis of the size of the imaged pitch relative to the imaged bars or imaged bar block, and
- means for identifying from the identified stored pitch value the particular stored width values of the imaged bars, on the basis of the size ratio between the imaged pitch identified and the imaged bars bars to be identified.

According to a fourth aspect, the invention provides a method of level determination specifically adapted for use with the levelling rod according to the first aspect, comprising the steps of:

- obtaining an image of a portion of the levelling rod at a remote location,
- identifying the position of the imaged portion along the levelling rod in terms of the following two parameters:

> i) the width (Wx) of at least one bar of the imaged portion, and
> ii) at least one pitch value of adjacent bars.

The position can be decoded directly from an evaluation of the values of the two parameters.

The method can comprise the steps of:

- storing data indicative of bar widths and pitches used for establishing positions along the levelling rod and their correspondance with the relative positions, and
- determining the position by comparing the imaged portion with the stored data.

For achieving the objective, there is provided a levelling rod for an electronic level having blocks of bar symbols disposed adjacent each other in the longitudinal direction along the levelling rod.

In the embodiment, bar symbols are separated at a pitch having one of several possible fixed (preset) values, preferably one among two possible different pitch values p1 and p2. Thus, in this case, the set of pitch values is composed of just two members, p1 and p2. The bar code symbols (or "bars") in the embodiments are the contrasting markings produced on the bar or staff. Adjacent bar code symbols are separated by a blank. The pitch value between two adjacent bar code symbols is the distance between the centres of the those two bar code symbols. The height readings are encoded by the width dimensions of the bar code symbols in combination with the two pitch values. A height information along the rod is expressed by a block of at least two adjacent bar code symbols, hereafter referred to as a "bar block" or simply "block", the information being expressed, for a given bar block, by the set data comprising: the width values of the bar symbols contained in the block and the corresponding pitch value(s). The height information is expressed in terms of the positions (relative to an end portion of the rod) of the bar blocks along the length (longidudinal) direction of the rod or staff, in a manner analogous to successive numbers marked at unit intervals on a measuring rule.

In the preferred embodiment, any three adjacent bar symbols forms a bar block. Each bar block on the levelling rod is made to correspond to a unique encoded height reading. The sequence of bar widths is generated randomly from a set of width values, while keeping any one bar block chosen from the bar blocks on the levelling rod different from a block chosen from any other portion of the rod. For each bar block, there is no separator bar to indicate where the block begins and ends, and bar blocks are arranged adjacent each other in the longitudinal direction along the levelling rod.

Any permutation of the widths for three discontinuous bar symbols chosen from any four adjacent bar symbols is unique.

Similarly as for a barcode aligned at a constant pitch, in this preferred embodiment, the two alternative possible pitches used, each of a fixed (preset) value ($p_1$ and $p_2$), also enable the discrimination of the width dimension of the bar symbols and therefore the distance between the rod and the instrument. If a barcode is aligned at a single constant pitch, the height readings are only encoded by the permutation of the width dimensions of the bar symbols. By contrast, for barcodes arranged at two possible fixed pitches, the height readings are encoded not only by the permutation of the pattern widths, but also by the sequence of the pitches between the bar symbols. This arrangement improves the robustness of the code arrangement against disturbances. In addition, because of the block repeat of the preferred embodiment, there is a larger pitch block pitch that helps in achieving coarse distance measurements at further distances.

Any three adjacent bar symbols in the levelling rod of the preferred embodiment forms a bar block. Each pattern width in one bar block is used to encode height readings. The position of each bar symbol within any one bar block can be indicated by the sequence of the two possible preset pitches selected between the bar symbols. No separator bar is therefore needed to demark any two adjacent bar blocks. Thus, a high encoding density can be achieved. Furthermore, each bar block on the levelling rod corresponds to a unique encoded height reading; any one bar block chosen from the bar blocks on the levelling rod is different from a block chosen from any other portion of the rod. Also, the sequence of bar widths is preferably generated randomly from a set of width values to enhance the aperiodic characteristics of the block barcode. Further, in the preferred embodiment, any permutation of the widths for three discontinuous bar symbols chosen from any four adjacent bar symbols is unique. Thus, the height information can still be decoded when any one bar symbol within four adjacent bar symbols cannot be recognised.

The electronic level of the preferred embodiment used in combination with the levelling rod comprises a pattern detection portion for detecting blocks of bar symbols of the levelling rod; a memory portion for storing bar blocks in advance; and a computation portion for comparing the detected pattern signals on the receiver with a stock of the blocks of pattern in the memory, to obtain the position information.

In case of an inversion in the placing of the staff, several methods for (automatic) detection of the inverted staff are proposed. In case of a multi pitched bar symbol arrangement with the number of pitches larger than two, the relative position of the repeated arrangement of the pitches is a preferred detection method. For example, in the case of three separate pitches p1, p2 and p3, the upright sequence of p1, p2, p3, p1, p2 turns into the sequence p2, p1, p3, p2, p1 which is easily recognisable. A second method of detecting staff inversion is through a distinct variation of the predetermined set of width values for each bar symbol. In this arrangement, bar symbol 1 in the block is chosen from a width set Ws1, bar symbol 2 of the block is chosen from a width set Ws2 and bar symbol 3 is choen from a width set Ws3. A third method is through robustness in the code selection. In this thrird method, not all of the available coding sequences, built up of the permutations of the width sets of each bar symbol in the block, are used on the staff. The use of the codespace is limited such that all the inverted sequences of the code arrangement are left out on the physical staff.

## Brief description of the drawings

The invention shall more fully understood, and its advantages shall become more apparent from reading the following detailed description of the preferred embodiments, given purely as non-limiting examples with reference to the appended drawings in which:

FIG. 1 is an explanatory view diagram showing one example of the constitution of block barcode levelling scale according to a preferred embodiment;
FIG. 2 is a block diagram showing a basic structure of the electronic level according to the preferred embodiment;
FIG. 3 is a schematic view showing an arrangement of a levelling rod and an electronic level according to the preferred embodiment; and
FIG. 4 is diagram showing the signal processing procedure of an electronic level used in the preferred embodiment.

## Detailed description of the preferred embodiments

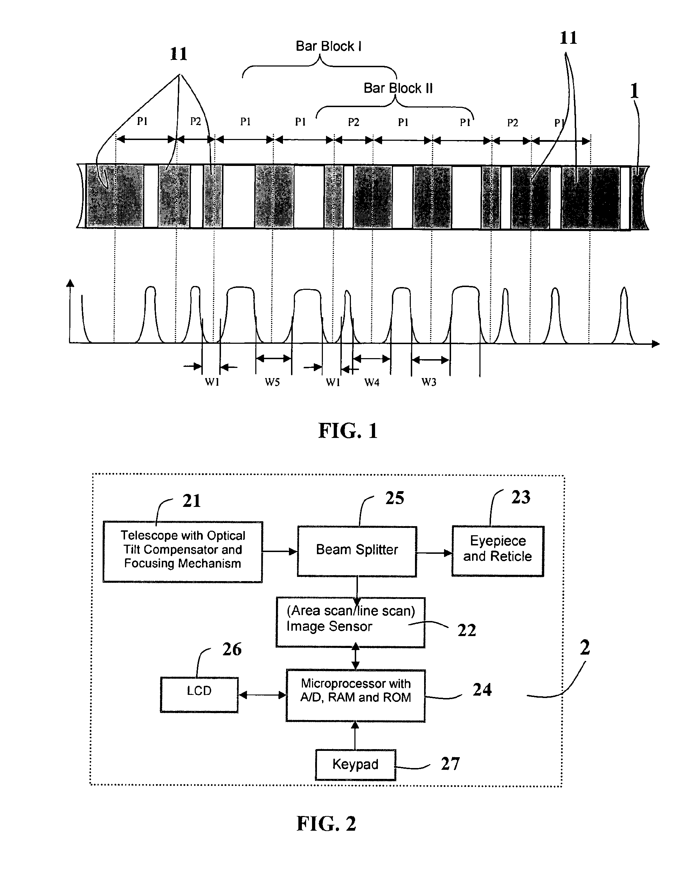

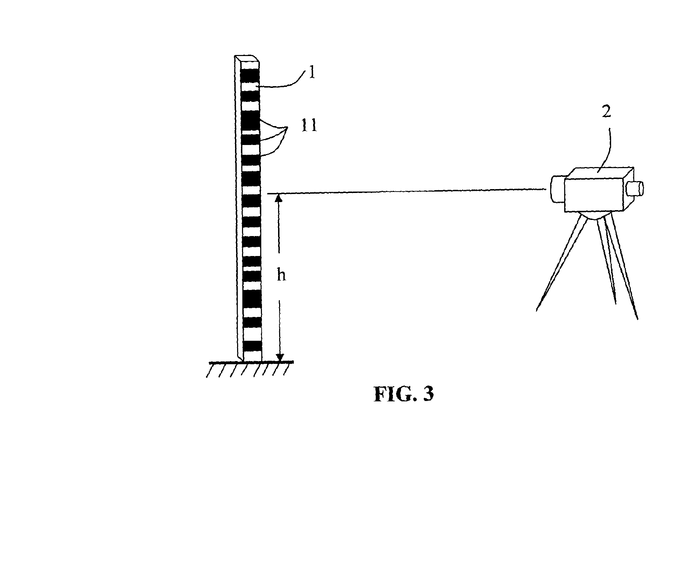

The levelling system consists of a staff or rod 1 and an electronic level 2, as shown in figures 1 to 3. In figure 1, reference number 1 denotes a levelling rod according to the preferred embodiment. The term "rod" or "staff" generally designates any elongated physical support on which the symbols described below can be implemented. In use, the levelling rod 1 is collimated by an electronic level 2 in order to measure the height "h" of the collimated position of the rod. The rod is provided with black bar symbols 11 disposed at two possible pitch values, designated pitches "$p_1$" and "$p_2$", and which themselves are constants. Thus, the set of predetermined pitch values used in the embodiment comprises just two members, which are the mutually different pitch values p1 and p2. Any three adjacent bar symbols consitute one bar block with a permutation of their bar widths. These are chosen from a predermined set of width values, that set being expressed as: {$w_x$| subscript x= 1,2,3,4 ...}.

The electronic level 2 comprises a telescope with an automatic optical tilt compensator and focusing mechanism 21, an area scan or line scan image sensor 22 with or without integrated A/D converter, an eyepiece and reticle 23, a processing unit 24 comprising a microprocessor, possibly an A/D (analog-to-digital converter) depending on the type of sensor used, RAM type memory and ROM type memory, a beam splitter 25, an LCD (liquid crystal display) 26, and a keypad 27, as shown in FIG 2. Numeric readings are printed on the back of the levelling rod 1 in correspondance with the height indications given by the bar blocks, so that an operator can read the height values with his own eyes through the eyepiece and reticle 23.

As shown in FIG.2, the electronic level 2 is provided with a telescope with automatic optical tilt compensator and focusing mechanism 21. A received image of the levelling rod 1 is split by the beam splitter 25 and sent to the image sensor 22. In levelling, the staff as well as the level must be kept parallel with gravitational field of the earth. To accomplish this, strict alignment requirements are imposed to the level as well the staff. In electronic levelling, usually a line scan sensor is used. This line scan sensor represents the vertical line of the cross hair of the telescope. In case of an implementation with a line scan sensor, there is only a single target line to which the staff must be well aligned. By using an implementation with area scan sensor, some degree of freedom can be tolerated with respect to the staff alignment. Because an area scan sensor has many imaging lines, a parallel shift of the staff over the sensor can be allowed. In addition, a slight tilt of the staff in the imaging plane can be compensated through detection of the middle position of the staff in the image. After detection of the middle position, a vertical crosshair is drawn over the image data followed by the necessary geometrical corrections for the height reading.

The image sensor 22 converts the optically received image of the levelling rod into a corresponding electrical signal, which it outputs into the processing unit 24. The electrical image signal is converted into a digital signal by the A/D converter and stored in the RAM. The processing unit 24 detects the pitches "$p_1$" and "$p_2$", then computes the width dimensions of each pattern 11, and identifies the corresponding bar blocks. The processing unit 24 then determines the height "h" of the collimated position by comparing bar blocks with a table value stored preprogrammed in its ROM. The collimation optical system comprises the telescope with automatic optical compensator and focussing mechanism 21, beam splitter 25, eyepiece and reticle 23. The image optical system includes the telescope with automatic optical compensator and focussing mechanism 21, beam splitter 25 and image sensor 22. The optical axis of the image optical system and the optical axis of the collimation optical system are arranged to coincide with each other, so that the collimation position on the levelling rod 1 and the collimated position in the image optical system coincide with each other.

As shown in FIG. 1, the bar symbols 11 on the levelling rod 1 are arranged at a pitch selected among two possible pitches "$p_1$" and "$p_2$", each of a constant value. Any three adjacent bar symbols constitutes a bar block. A bar block is the minimum unit for encoding height readings. The widths of the bar symbols are chosen from a predetermined set of width value, designated the set { $W_x$ | subscript x=1,2,3,4... }. In figure 1, one example of the bar block I is represented as follows:

$$\{ (w_5 , w_1, w_4), (p_1, p_2)\} \qquad (1)$$

where p1 is the value of the pitch between the bar symbol of width $w_5$ and the bar symbol of width $w_1$, and $p_2$ is the value of the pitch between the bar symbol of width $w_1$ and $w_5$.

In other words, the information conveyed by the bar block is also encoded by the choice of pitch values between adjacent bar symbols of the bar block.

The sequence of the bar symbols is arranged such that any one permutation of three adjacent bar symbols {{ ($w_a$ , $w_b$ , $w_c$), ($p_a$ , $p_b$)}} selected from the block barcode scale, where $w_a$ , $w_b$, $w_c \in \{w_x$ | subscript x= 1,2,3,4 ...} and ($p_a$ , $p_b$) $\in$ { ($p_1$ , $p_1$), ($p_1$, $p_2$), ($p_2$ , $p_1$) }, is different from any permutation of three adjacent bar symbols extracted from any other portion of the levelling rod.

By virtue of the introduction of the choice of pitch values, no separator bar is needed in the barcode block, and the encoding density can be improved. The position of each bar symbol within a bar block can be determined by discriminating the sequence of the two possible pitches within a barcode block. Within a specified FOV (field of view) for level telescope, a high barcode density signifies that a closer Minimum Measurement Distance can be achieved. Also, within a unit length represented, a barcode with sparse bar symbols can be more easily recognised by using a certain telescopic magnification of the level. Therefore, the ratio of Maximum Measurement Distance to Minimum Distance can be accordingly increased by using a barcode scale without separator bars.

Further, any permutation ($w_a$ , *, $w_c$, $w_d$) or ($w_a$ , $w_b$, *, $w_d$) for the widths of three discontinuous bar symbols chosen from any four adjacent bar symbols ($w_a$, $w_b$, $w_c$, $w_d$) is set such that it does not coincide with any other part of a permutation for the widths of three discontinuous bar symbols from any four adjacent bar symbols on the levelling rod, where "*" is an unknown pattern width hidden by an obstacle, or not imaged for any other reason. Therefore, if any one bar symbol in the above-mentioned permutation is hidden, the height information still can be decoded only by the detected bar widths.

On the basis of the focal length $f$ of the telescope objective and detected fixed pitch values $p_1$ and/ or $p_2$, the distance between the levelling rod 1 and electronic level 2 can be estimated by the equation:

$$L=f(p_1/m_1) =f(p_2/m_2) \qquad (2)$$

where $m_1$ and $m_2$ are the corresponding image lengths on the focal plane for the pitch preset values $p_1$ and $p_2$ .

On the basis of the detected constant pitches $p_1$ and $p_2$, the widths of the bar symbols at the collimated portion on the levelling rod can be discriminated in the short distance. Therefore, the height "h" of the collimated portion can be calculated by discriminating the permutation of the widths of the bar symbols and the permutation of the pitches $p_1$ and/or $p_2$ between the bar symbols. At a long distance, the images of the bar symbols 11 become too small to be differentiated from each other. In such a case, when pitch value constants $p_1$ and $p_2$ are known, the microprocessor 24 will seek the height "h" of the collimated position in a refined search range through cross-correlation evaluation between the detected image of the barcode levelling rod 1 and the stored reference barcode in the ROM. The measurement results are displayed on the LCD display 26.

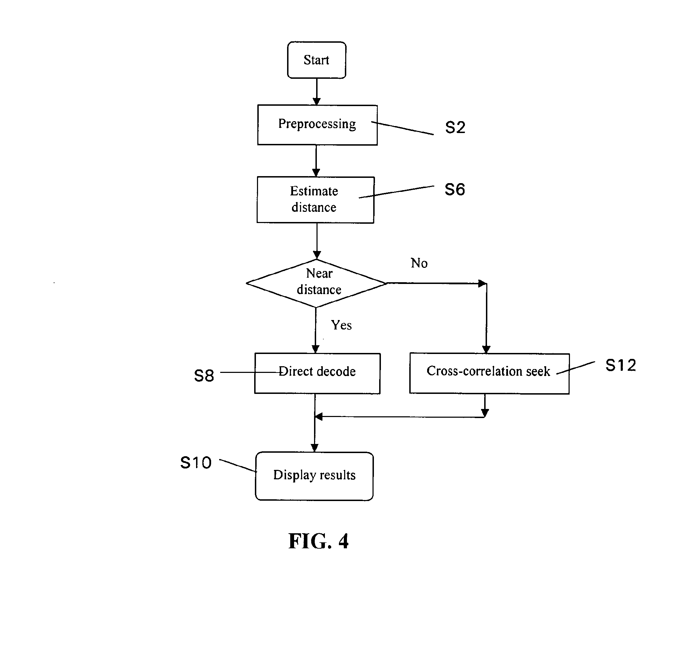

The data processing procedure for the preferred embodiment is outlined in the flow chart of figure 4.

The procedure begins with a pre-processing step S2 during which the image data is acquired and organised in digital form. From that data, the processing unit 24 produces an estimate of the distance of the levelling rod 1. This distance estimate is submitted to a threshold distance comparison to determine whether it falls within the near distance range or not (step S6). This threshold distance value is produced so that a distance up to that threshold is not too far to allow a direct decode.

If the distance falls within the near distance range, then the height h is given by a direct decode of the bar block pattern in the sight of the electronic level 2 (step S8), and the decoded heigth value h is displayed on the LCD 26 (step S10).

If the distance falls outside the near distance range, then the procedure proceeds to perform a cross-correlation seek (step S12), as mentioned above. This cross-correlation is performed using pattern identification algorithms, where the pattern corresponding to the bar block in question is compared with the patterns of the bar blocks stored in the memory of the processing unit 24. The stored pattern that gives a positive comparison (i.e. corresponds) with the imaged pattern is then taken to be the pattern on the levelling rod that is imaged. The height value is then obtained for that pattern from the cross-reference between that stored pattern and the height value associated thereto, this cross-reference information being stored at the level of the processing unit 24.

As explained above, in the levelling rod and the electronic level of present embodiment, the position of the collimating position can be determined by both a permutation of the widths of 3 adjacent bar symbols and the permutation of the 2 pitches between the bar symbols. In addition, the sequence of the width dimension of the bar symbols is selected so that the height of the collimating portion can be determined by just a permutation of the widths of 3 symbols from an interrupted sequence of 4 adjacent symbols. This measure confers the block barcode with some degree of immunity to disturbances.

It is clear that the invention is amenable to numerous variants, extrapolations, and equivalents, for instance as regards the number of bars that make up a bar block, the number three given in the description being just an example, the number of values and choice of values for the pitches and for the widths, the hardware and software implementation, etc.

**Claims**

1. A levelling rod (1) for a level determining apparatus (2), said rod having a plurality of bars (11) therealong serving to express position indications along said levelling rod, each bar having a width (Wx) taken from a set of width values,

    **characterised in that** the pitch between adjacent bars (11) is non uniform, said pitch between a given pair of adjacent bars being a pitch value from a set of predetermined pitch values (p1, p2),

    and **in that** said position along said levelling rod is expressed in terms of the following two parameters:

    i) the width (Wx) of at least one bar, and
    ii) at least one pitch value of adjacent bars.

2. Levelling rod of claim 1, wherein said two parameters together distinguish a position along said levelling rod from at least one neighbouring position along said levelling rod expressed by at least a different bar symbol width and/or at least one other pitch value.

3. Levelling rod (1) according to claim 1 or 2, wherein said position along said levelling rod is expressed in terms of a bar block of at least two successive bar symbols (11) along said levelling rod and at least one said pitch value (p1,p2) of adjacent bars in said bar block.

4. Levelling rod (1) according to any one of claims 1 to 3, wherein said set of predetermined pitch values is composed of just two pitch values (p1, p2).

5. Levelling rod of claim 3 or 4, wherein said bar block is comprised of first, second and third successive bars (11), the position information being expressed by the widths of those bars, a pitch value (p1, p2) for the pitch between said first and second bars, and a pitch value (p1, p2) for the pitch between said second and third bars.

6. Levelling rod according to any one of claims 3 to 5, wherein any given bar block from the levelling rod is different from a bar block from any other portion of the levelling rod in terms of the set of values that comprise the width values and pitch value(s).

7. Levelling rod according to any one of claims 3 to 6, wherein at least some bar blocks (I, II) overlap each other by having at least one bar code symbol in common.

8. Levelling rod according to any one of claims 1 to 7, wherein no specific separator symbol is present to delimit adjacent said positions/bar blocks along said levelling rod, these positions being distinguished by the distinctness of a combination of said two parameters for the respective positions/bar blocks.

9. Levelling rod according to any one of claims 1 to 8, wherein the width values of bars (11) assigned to a respective position/bar block have a predetermined relation such that the value(s) of the pitch(es) between those bars have a common denominator, whereby in a Fourier analysis, the selective frequency lines created by a particular pitch is enhanced through the modulations of the others.

10. Levelling rod according to any one of claims 1 to 9, wherein the width values of the bars (11) belong to set Wx of width values, in which a large width value is a multiple n of a smaller width value, such as to optimise the dynamic range of the coding elements and cover a wider distance range.

11. Levelling rod according to any one of claims 1 to 10, wherein a given position/bar block is expressed by at least three successive bars and two same pitch values.

12. Levelling rod according to any one of claims 1 to 11, wherein the width dimensions of the bars are distributed pseudo-randomly from a set of predetermined values.

13. Levelling rod according to any one of claims 1 to 12, wherein said position along said levelling rod is expressed in terms of any subset of N different members of a set of at least N+1 successive bars along said levelling rod at said position, so allowing a position information to read from said rod even if only N out of N+1 or more than N+1 bars are identified.

14. Levelling rod according to claim 13, wherein said any subset of N different members is different from any other subset of N different members of any other partially overlapping neighbouring set of N+1 members.

15. Levelling rod according to claim 13 or 14, wherein N=3, whereby a permutation of the widths of any 3 bars from 4 adjacent bars at the levelling rod is different from a permutation of the widths of any 3 bars from any set of 4 adjacent bars at any other portion of the levelling rod.

16. Levelling rod according to any one of claims 1 to 15, wherein the width values of each bar expressing a position/ a bar block are mutually different, thereby allowing automatic detection of an inverted levelling rod.

17. Levelling rod according to any one of claims 1 to 16, wherein the width values of bars expressing a position/a bar block have a predetermined relation such that the value(s) of the spacings between those bars have a common denominator, whereby in a Fourier analysis, the selective spectral lines in the frequency domain created by a particular spacing is enhanced through the modulations of the other spacings.

18. Levelling rod according to any one of claims 3 to 17, wherein each said bar block has a length equal to an integral multiple of at least one determined pitch value (p1,p2) contained in that block.

19. Use of the levelling rod (1) according to any one of claims 1 to 18 for obtaining a height indication, wherein said levelling rod is positioned substantially in a vertical plane, whereby said positions of said bars express a height value.

20. Level determination apparatus specifically adapted for use with the levelling rod according to any one of claims 1 to 18, comprising:

- means for obtaining an image of a portion of said levelling rod at a remote location,
- means for identifying the position of said imaged portion along said levelling rod in terms of the following two parameters:

    i) the width (Wx) of at least one bar of said imaged portion, and

    ii) the pitch value(s) of adjacent bars.

21. Apparatus according to claim 20, comprising means for decoding said relative position directly from an evaluation (S8) of the values of said two parameters.

22. Apparatus according to claim 20 or 21, comprising an area scan sensor to allow for shifting of the staff, increased tolerance of staff alignment in the image. plane and automatic correction of the height readings of the tilted staff in the image plane.

23. Apparatus according to any one of claims 20 to 22, comprising:

- memory means (24) storing data indicative of bar widths and pitches used for establishing relative positions along said levelling rod (11) and their correspondance with said relative positions, and
- means (24) for determining said relative position by comparing (S10) said imaged portion with said stored data.

24. Apparatus according to any one of claims 20 to 23, comprising:

- pattern detection means (22) for detecting the pitches and a symbol bar of the levelling rod;
- memory means (24) for storing the sequence of the widths of symbol bars and the corresponding sequence of the pitches between the bar symbols;
- computation means (24) for obtaining the relative position information of the collimated portion on the levelling rod, based on comparing a detected signal from the pattern detecting portion with the sequence of the symbol bars in the memory portion.

25. Apparatus according to any one of claims 20 to 24, comprising:

- means (24) for storing the pitch values (p1, p2) and width values ($w_1$, $w_3$, $w_4$, $w_5$) used for said levelling rod (1),
- means for identifying, from an imaged pitch, the corresponding particular predetermined stored pitch value (p1, p2), on the basis of the size of said imaged pitch relative to the imaged bars or imaged bar block, and
- means for identifying from said identified stored pitch values the particular stored width values of said imaged bars, on the basis of the size ratio between the imaged pitch identified and said imaged bars to be identified.

26. Method of level determination specifically adapted for use with the levelling rod according to any one of claims 1 to 18, comprising the steps of:

  - obtaining an image of a portion of said levelling rod at a remote location,
  - identifying the relative position of said imaged portion along said levelling rod in terms of the following two parameters:

      i) the width (Wx) of at least one bar of said imaged portion, and
      ii) at least one pitch value of adjacent bars.

27. Method according to claim 26, wherein said position is decoded directly from an evaluation (S8) of the values of said two parameters.

28. Method according according to claim 26 or 27, comprising the steps of:

  - storing (24) data indicative of bar widths and pitches used for establishing positions along said levelling rod (11) and their correspondance with said positions, and
  - determining said position by comparing (S 10) said imaged portion with said stored data.

**FIG. 1**

**FIG. 2**

**FIG. 3**

```
                    ┌─────────┐
                    │  Start  │
                    └────┬────┘
                         │
                         ▼
              ┌──────────────────────┐
              │    Preprocessing     │────────  S2
              └──────────┬───────────┘
                         │
                         ▼
              ┌──────────────────────┐
              │      Estimate        │────────  S6
              │      distance        │
              └──────────┬───────────┘
                         │
                         ▼
                      ╱──────╲          No
                    ╱   Near   ╲─────────────────────┐
                    ╲ distance ╱                     │
                      ╲──────╱                        │
                         │                            │
                        Yes                           │
                         │                            ▼
        ┌──────────────────────┐      ┌──────────────────────────┐
  S8 ───│    Direct decode     │      │   Cross-correlation seek  │──── S12
        └──────────┬───────────┘      └──────────────┬───────────┘
                   │                                  │
                   ◄──────────────────────────────────┘
                   │
                   ▼
  S10 ──  ┌──────────────────────┐
          │    Display results   │
          └──────────────────────┘
```

# FIG. 4

**EP 1 593 934 A1**

**European Patent Office**

**EUROPEAN SEARCH REPORT**

Application Number

EP 04 01 0760

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | DE 37 39 664 A (JENOPTIK JENA GMBH) 14 July 1988 (1988-07-14) | 1-4,6,8, 10, 18-21, 23,24, 26-28 | G01C15/06 G01C5/00 |
| Y | * column 3, line 46 - column 4, line 1 * | 7 | |
| A | * column 4, line 43 - column 5, line 8; figures 2,3 * ----- | 5,16 | |
| X | DE 195 30 788 C (LEICA AG) 1 August 1996 (1996-08-01) * figure 1 * ----- | 1,20,26 | |
| X,D | US 4 715 714 A (BRAUNECKER BERNHARD ET AL) 29 December 1987 (1987-12-29) * figure 1 * ----- | 1,20,26 | |
| A | EP 0 290 140 A (OPTEC CO LTD) 9 November 1988 (1988-11-09) * column 4, line 18 - line 23 * ----- | 1 | |
| Y | DE 41 36 888 A (HUEBNER JOHANNES) 13 May 1993 (1993-05-13) * column 1, line 46 - line 65 * ----- | 7 | TECHNICAL FIELDS SEARCHED (Int.Cl.7) G01C G01D |

The present search report has been drawn up for all claims

| Place of search | Date of completion of the search | Examiner |
|---|---|---|
| Munich | 5 October 2004 | Rabenstein, W |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

14

**EP 1 593 934 A1**

**ANNEX TO THE EUROPEAN SEARCH REPORT
ON EUROPEAN PATENT APPLICATION NO.**                    EP 04 01 0760

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2004

| Patent document cited in search report | | Publication date | Patent family member(s) | | Publication date |
|---|---|---|---|---|---|
| DE 3739664 | A | 14-07-1988 | DD | 257113 A1 | 01-06-1988 |
| | | | CH | 675300 A5 | 14-09-1990 |
| | | | DE | 3739664 A1 | 14-07-1988 |
| DE 19530788 | C | 01-08-1996 | DE | 19530788 C1 | 01-08-1996 |
| | | | CN | 1194688 A ,B | 30-09-1998 |
| | | | DE | 59601622 D1 | 12-05-1999 |
| | | | WO | 9708512 A1 | 06-03-1997 |
| | | | EP | 0846251 A1 | 10-06-1998 |
| | | | JP | 11511550 T | 05-10-1999 |
| US 4715714 | A | 29-12-1987 | CH | 676043 A5 | 30-11-1990 |
| | | | DE | 3424806 A1 | 01-08-1985 |
| EP 0290140 | A | 09-11-1988 | JP | 1769788 C | 30-06-1993 |
| | | | JP | 4054163 B | 28-08-1992 |
| | | | JP | 63252216 A | 19-10-1988 |
| | | | DE | 3883593 D1 | 07-10-1993 |
| | | | DE | 3883593 T2 | 24-03-1994 |
| | | | EP | 0290140 A2 | 09-11-1988 |
| | | | US | 5087125 A | 11-02-1992 |
| DE 4136888 | A | 13-05-1993 | DE | 4136888 A1 | 13-05-1993 |

For more details about this annex : see Official Journal of the European Patent Office, No. 12/82

15